# EUROPÄISCHE PATENTSCHRIFT

(11) **EP 2 988 978 B1**
(45) Veröffentlichungstag und Bekanntmachung des Hinweises auf die Patenterteilung: **21.10.2020**
(21) Anmeldenummer: 14723746.5
(22) Anmeldetag: 25.04.2014
(51) Int. Cl.: B60T 11/22, B60T 11/26, B60T 17/04, B60T 17/06

(54) **DRUCKMITTELBEHÄLTER MIT ABSPERRVORRICHTUNG.**
HYDRAULIC FLUID CONTAINER WITH BLOCKING DEVICE
CONTENANT DE FLUIDE SOUS PRESSION POURVU D'UN DISPOSITIF D'ARRÊT

(30) Priorität: 26.04.2013 DE 102013207742
(43) Veröffentlichungstag der Anmeldung: 02.03.2016
(73) Patentinhaber: Continental Teves AG & Co. OHG, 60488 Frankfurt am Main (DE)
(72) Erfinder: KREBS, Werner, 65582 Hambach (DE); SCHLICHT, Stephan, 64569 Nauheim (DE); SIBR, David, 543 01 Vrchlabi (CZ)
(86) Internationale Anmeldenummer: PCT/EP2014/058487
(87) Internationale Veröffentlichungsnummer: WO 2014/174092

(56) Entgegenhaltungen:
- EP-A1- 0 340 186
- DE-C- 716 384
- DE-C1- 10 135 793
- FR-A1- 2 872 759

## Beschreibung

### Stand der Technik:

Bekannte hydraulische KFZ-Bremsanlagen verfügen oft über Druckmittelbehälter, welche eine Druckmittelversorgung eines Hauptbremszylinders oder eines Aktuators sicherstellen. Oft werden derartige Druckmittelbehälter direkt an einem Hauptbremszylinder angeordnet und die Druckmittelversorgung erfolgt durch Stutzen, welche am Druckmittelbehälter angeformt sowie abdichtend in Aufnahmesitze des Hauptbremszylinders eingeführt sind.

Bei einer starken Krafteinwirkung auf den Druckmittelbehälter, beispielsweise infolge eines Unfalls kann es vorkommen, dass der Druckmittelbehälter vom Hauptbremszylinder abgehoben wird. Um in einem solchen Fall ein Austreten des Druckmittels, welcher sich an heißen Teilen im Motorraum entzünden könnte, aus dem Druckmittelbehälter zu unterbinden ist es bekannt, Absperrvorrichtungen vorzusehen, welche die hydraulische Verbindung durch die Stutzen des Druckmittelbehälters automatisch absperren.

Beispielsweise sind Absperrvorrichtungen bekannt, welche eine vormontierte Ventileinheit aufweisen, die bei der Herstellung des Druckmittelbehälters in einen Innenraum des Druckmittelbehälters eingeführt und durch Warmumformung von gesonderten Fixierdornen irreversibel lösbar befestigt.

Aus EP 0 340 186 A1 ist eine andere Absperrvorrichtung bekannt, bei der an einem in dem Stutzen angeordneten Ventilkolben mit einem innenraumseitig daran angeordneten Dichtelement bekannt. Außerhalb des Aufnahmesitzes wird das Dichtelement gegen den Innenrand des Stutzens durch eine Druckfeder gepresst, wobei die Druckfeder in dem Behälterinnenraum zwischen dem Ventilkolben und einer Stützplatte vorgespannt ist, welche durch ein in den Behälterinnenraum vorgestreckt angeformtes Stützrohr gehalten wird.

Komplexität im Aufbau und Montage, ein großer Raumbedarf für Montagewerkzeuge sowie die Notwendigkeit von zusätzlichen Konstruktionselementen zur Lagerung und Fixierung der Ventileinheit innerhalb des Behältergehäuses werden als nachteilig angesehen.

### Aufgabe:

Es ist daher eine Aufgabe der vorliegenden Erfindung, einen verbesserten Druckmittelbehälter mit einer Absperrvorrichtung anzubieten, welches im Vergleich zu dem Stand der Technik einen kleineren Raumbedarf aufweist, einfacher und kostengünstiger herstellbar und montierbar, sowie mit einem geringen Aufwand in die bereits bestehenden Druckmittelbehältervorrichtungen integrierbar ist.

### Lösung und Vorteile:

Die Aufgabe wird erfindungsgemäß zusammen mit den kennzeichnenden Merkmalen von dem unabhängigen Anspruch 1 gelöst, indem das Dichtelement zu Lagesicherung des Ventilkolbens 11 ausgebildet sein kann. Damit dient es vorteilhafterweise gleichzeitig als eine Dichtung, ein Anschlag sowie zur Aufnahme von Schließkräften bei einem geschlossenen Zustand der Absperrvorrichtung. Auf gesonderte Elemente zur Fixierung der Absperrvorrichtung in dem Druckmittelbehälter während des Transports, der Lagerung der Montage sowie im Betrieb kann verzichtet werden, ebenso zusätzliche Transportschutzkappen für Stutzen als Kontaminierungsschutz.

Unteransprüche geben weitere mögliche vorteilhafte Ausgestaltungen an.

In vorteilhafter Weise kann ein Bereich des Ventilkolbens zwischen dem Anschlag und dem Dichtelement in dem geschlossenen Zustand der Absperrvorrichtung auf Zug belastet ausgeführt sein.
Damit kann die Absperrvorrichtung derart gestaltet werden, dass es im Vergleich mit der bekannten Ausführung eine kleinere Bauform aufweist sowie kostengünstiger ist, weil es über weniger Bauteile verfügt, durch den Stutzen montierbar und ohne Warmumformung oder Kleben, lediglich durch das Montieren des Dichtelements fixierbar ist.

In einer Weiterbildung der Erfindung kann eine derartige Absperrvorrichtung nahezu vollständig direkt in dem Kanal des Stutzens eines erfindungsgemäßen Druckmittelbehälters angeordnet werden. Dadurch kann die erfindungsgemäße Absperrvorrichtung in fast jedem bestehenden Druckmittelbehälter ohne größere Werkzeugänderungen eingesetzt werden, indem lediglich eine an den Kanal des Stutzens angepasste Ausführung der Absperrvorrichtung bereitgestellt und gegebenenfalls ein Ventilsitz zur Auflage des Dichtelements angepasst wird.

### Figurenbeschreibung:

Weitere Einzelheiten, Merkmale, Vorteile und Anwendungsmöglichkeiten der Erfindung gehen aus Unteransprüchen zusammen mit der Beschreibung anhand der Zeichnungen hervor. Übereinstimmende Komponenten und Konstruktionselemente werden nach Möglichkeit mit gleichen Bezugszeichen versehen. Nachstehend zeigt:
Fig.1 eine erfindungsgemäße Ausführung eines Druckmittelbehälters montiert an einen Tandem-Hauptbremszylinder, mit zwei Absperrvorrichtungen im geöffneten Zustand.
Fig.2 eine bekannte Ausführungsworm einer Absperrvorrichtung in Schnittdarstellung.
Fig.3 eine erfindungsgemäße Ausführungsform einer Absperrvorrichtung um geschlossenen Zustand in Schnittdarstellung.
Fig.4 die erfindungsgemäße Ausführungsform einer Absperrvorrichtung nach der Fig.3 in einem geöffneten Zustand mit dem Stutzen in einen Aufnahmesitz des Hauptbremszylinders eingeführt.

### Fig.1

Ein Druckmittelbehälter 1 verfügt über ein Behältergehäuse 2, dessen Innenraum zwei Druckmittelkammern 3,3' aufweist, die ein flüssiges Druckmittel enthalten. Zum Befüllen des Druckmittelbehälters 1 mir Druckmittel ist ein Einfüllstutzen 27 vorgesehen, der mit einer Verschlusskappe 28 verschlossen ist. An dem Behältergehäuse 2 sind zwei Stutzen 4,4' angeformt, welche in den Aufnahmesitzen 6,6' eines Tandem-Hauptbremszylinders 7 angeordnet und mittels Dichtungen 8,8' fixiert sowie gegen die Umgebung abgedichtet sind. Die Aufnahmesitze 6,6' sind topfförmig mit jeweils einer Wandung 22 und einem Boden 23 ausgebildet. Die Innenkanäle 9,9' der Stutzen 4,4' ermöglichen eine Hydraulische Verbindung zwischen der jeweiligen Druckmittelkammer 3,3' und Nachlaufkanälen 5,5', welche ihrerseits an nicht gezeigte Druckkammern im Inneren des Hauptbremszylinders 7 hydraulisch angeschlossen sind. Zwei Absperrvorrichtungen 10,10' sind in den Stutzen 4,4' angeordnet und befinden sich in einem geöffneten Zustand, bei dem die hydraulische Verbindung zwischen den Druckmittelkammern 3,3' und Nachlaufkanälen 5,5' besteht und nicht unterbrochen ist.

### Fig.2

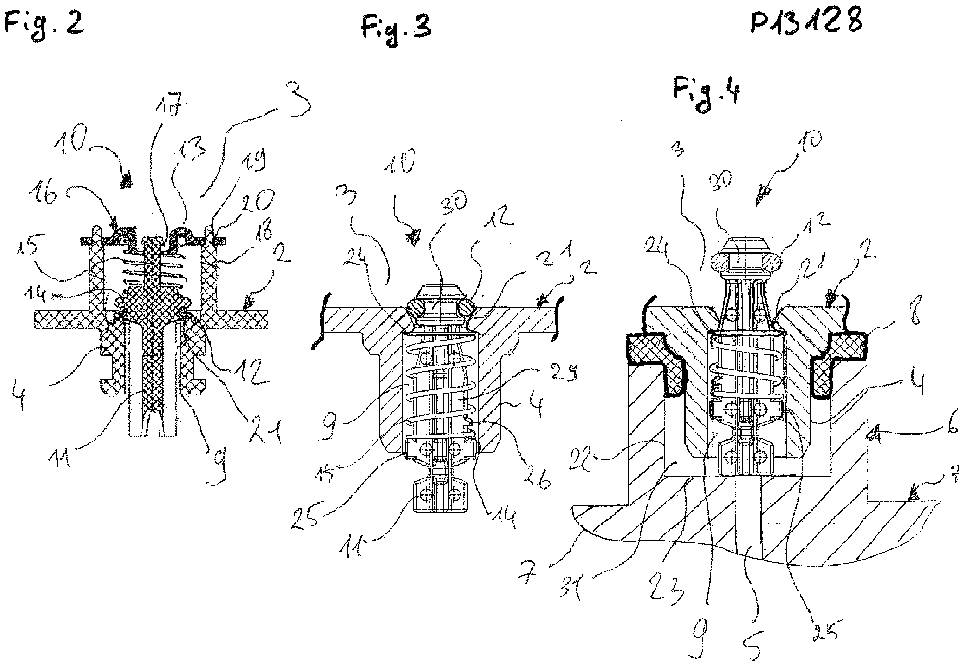

Fig.2 zeigt eine bekannte Ausführungsform einer Absperrvorrichtung 10. Es verfügt über eine Ventileinheit 16, welche aus einem Ventilkolben 11, einem auf dem Ventilkolben 11 angeordneten Dichtelement 12, einer Haltescheibe 13 und einem zwischen der Haltescheibe 13 und einem Anschlag 14 eingespannten Federelement 15 besteht und im Wesentlichen, bis auf ein Teil des Ventilkolbens 11 innerhalb der Druckmittelkammer 3 angeordnet ist. Ein Scheibenanschlag 17 verhindert das Weggleiten der Haltescheibe 13 von dem Ventilkolben 11. Das Dichtelement 12 wird durch das mittelbar über die Haltescheibe 13 sich am Behältergehäuse 2 abstützende Federelement 15 gegen einen Ventilsitz 21 gedruckt.

Zur Montage in dem Behältergehäuse 5 wird die Ventileinheit 16 zunächst vormontiert, dann in das Behältergehäuse 2 sowie aus dem Innenraum des Behältergehäuses 2 in den Kanal 9 des Stutzens 4 eingeführt, auf den Lagersitzen 18 angeordnet, so dass Fixierdorne 19 durch Öffnungen 20 der Haltescheibe durchragen und anschließend durch Anschmelzen der Fixierdorne 19 irreversibel in dem Behältergehäuse 2 fixiert. Dabei wird das Dichtelement 12 durch die Vorspannkraft des Federelements 15 gegen einen Ventilsitz 21 gedrückt. Wird das Druckmittelbehälter 1 mit dem Stutzen 4 in einen Aufnahmesitz 6 eingeführt, drückt der Boden 23 des Aufnahmesitzes 6 den Ventilkolben 11 nach oben so, dass das Dichtelement 12 von dem Ventilsitz 21 abgebt und die hydraulische Verbindung durch den Kanal 9 freigibt.

### Fig.3

Die Fig.3 zeigt eine erfindungsgemäße Ausführungsform einer Absperrvorrichtung 10. Im Gegensatz zu der in der Fig.2 beschriebenen bekannten Stand der Technik ist die erfindungsgemäße Vorrichtung nahezu vollständig in dem Kanal 9 des Stutzens 4 angeordnet, so dass lediglich ein Ende des Ventilkolbens 11 mit dem Dichtelement 12 in die Druckmittelkammer 3 innerhalb des Behältergehäuses 2 hineinragt.

Das Dichtelement 12 ist in einer umlaufenden Nut 30 an dem in die Druckmittelkammer 3 hineinragenden Ender angeordnet und dient bei seiner Anlage an dem Ventilsitz 21 nicht nur zum Unterbinden der hydraulischen Verbindung durch den Kanal 9, sondern gleichzeitig zur Lagesicherung des Ventilkolbens 11 und somit der gesamten Absperrvorrichtung 10 in dem Behältergehäuse 2. Es werden somit keine weiteren gesonderten Sicherungselemente für die Befestigung der Absperrvorrichtung 10 in dem Druckmittelbehälter 1 benötigt.

Es ist ferner eindeutig erkennbar, dass im Unterschied zu dem vorstehend beschriebenen bekannten Stand der Technik das Dichtelement 12 der erfindungsgemäßen Absperrvorrichtung 10 durch das unmittelbar am Behältergehäuse 2 abstützende Federelement 15 gegen den Ventilsitz 21 gezogen wird. Weil das Federelement 15 zwischen dem Anschlag 14 am Ventilkolben 11 und dem Kragen 24, welcher unterhalb des Ventilsitzes 21 in den Kanal 9 hineinragt vorgespannt angeordnet ist, wird der Ventilkolben 11 in dem gezeigten geschlossenen Zustand der Absperrvorrichtung 10 in dem Bereich zwischen dem Anschlag 14 und dem Dichtelement 12 auf Zug belastet.

Der Ventilkolben 11 weist in seinem Bereich zwischen der Nut 30 und seinem dem Dichtelement 12 abgewandten Ende einen im Wesentlichen kreuzförmigen Querschnitt auf, welcher durch vier Rippen 29 ausgebildet ist. Freiräume zwischen den Rippen 29 dienen dem Durchfluss des Druckmittels durch den Kanal 9, vorbei an sowie entlang dem Ventilkolben 11. Es versteht sich, dass ebenfalls eine von vier abweichende Anzahl von Rippen 29 innerhalb der Erfindung zulässig ist, ebenso kann der Querschnittsprofil des Ventilkolbens 11 sternförmig, quadratisch, polygonal, oval oder auch rund mit eingebrachten Längsnuten ausgebildet sein oder eine Kombination der vorbezeichneten Profile Aufweisen, ohne die Erfindung zu verlassen.

Ferner verfügen die Rippen 29 über Vorsprünge 25, welche derart ausgebildet sind, dass sie über den Außendurchmesser des Federelements 15 hinausragen, dienen zur Führung und Zentrierung des Ventilkolbens 11 in dem Kanal 9.

Ein Verliersicherungselement 26, welcher wie abgebildet an nur einer oder auch an mehreren Rippe 29 oder an einer anderen Stelle am Körper des Ventilkolbens 11 angeordnet sein kann, dient als Verliersicherung für das Federelement 15 während des Transports, der Montage oder bei anderen Handhabungsvorgängen. Jedoch kann innerhalb der Erfindung ebenso auf ein derartiges Verliersicherungselement 26 verzichtet werden.

### Fig.4

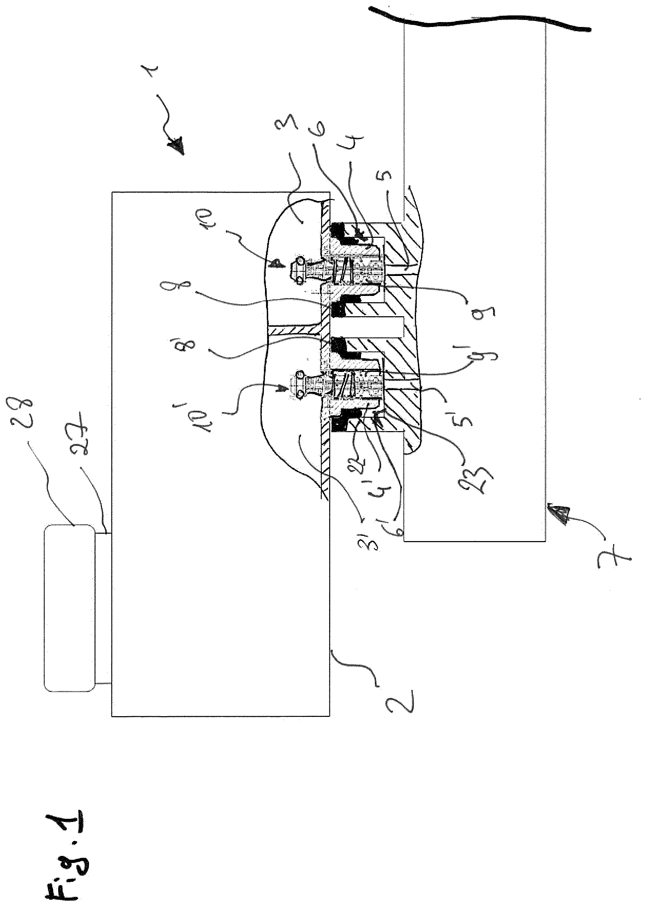

Die Fig.4 zeigt ein Ausschnitt des Behältergehäuses 2 in dem Montierten Zustand, wenn der Stutzen 4 in dem Aufnahmesitz 6 angeordnet und durch die Dichtung 8 gegen die Umgebung des Druckmittelbehälters 1 abgedichtet sowie geführt und gehalten.
Der Aufnahmesitz 6 ist an dem gezeigten Beispiel an einem Hauptbremszylinder 7 entsprechend der Fig.1 angeformt, kann jedoch innerhalb der Erfindung ebenso an einem beliebigen anderen Aggregat oder an einer Anschlussleitung angeordnet sein. Der abgebildete Aufnahmesitz 6 ist im Wesentlichen topfförmig mit einer Wandung 22 und einem Boden 23 ausgebildet und weist einen Nachlaufkanal 5 auf, welcher eine hydraulische Verbindung zwischen dem Innenbereich 31 des Aufnahmesitzes 6 und einem weiteren nicht gezeigten Innenraum innerhalb der Bremsanlage ermöglicht.
Der Ventilkolben 11 stützt sich an dem Boden des Aufnahmesitzes 6 mit einem Ende so, dass sein anderes Ende in die Druckmittelkammer 3 hineingeschoben verbleibt, das Dichtelement 12 von dem ventilsitz abgehoben ist und ein Druckmittelaustausch zwischen der Druckmittelkammer 3 und dem Innenbereich 31 des Aufnahmesitzes 6 und somit einem weiteren nicht gezeigten Innenraum innerhalb der Bremsanlage möglich ist.
Wird nun der Druckmittelbehälter 1 durch eine starke Krafteinwirkung, beispielsweise infolge eines Unfalls derart verschoben, dass der Stutzen 4 aus dem Aufnahmesitz 6 heraus bewegt wird, wird der Ventilkolben 11 nicht mehr durch den Boden 23 gestützt und durch die Vorspannkraft des Federelements 15 in Richtung Umgebung bewegt, so dass das Dichtelement 12 an dem Ventilsitz 21 dichtend zur Anlage kommt und die hydraulisch Verbindung zwischen der Druckmittelkammer 3 und dem Kanal und somit der Durchfluss durch den Kanal 9 abgesperrt wird.

Die abgebildete Lage des Ventilkolbens 11 bei einem offenen Zustand der Absperrvorrichtung 10 entspricht weitgehend auch einer Montaglagelage beim Einbau der Absperrvorrichtung 10 in das Behältergehäuse 2. Bei dem Montagevorgang wird zunächst Das Federelement 15 wird auf den Ventilkolben 11 auf- und mit wenigstens einer Windung über das Verliersicherungselement 26 übergeschoben und durch das Einrasten der Windung in einem Bereich zwischen dem Verliersicherungselement 26 und dem Anschlag 14 gegen verlieren gesichert. Die aus dem Ventilkolben 11 und dem Federelement 15 gebildete vormontierte Baueinheit wird von außen in den Kanal 9 des Stutzens 4 in Richtung Druckmittelkammer 3 hineingeschoben bis das Ende des Ventilkolbens 11 mit der Nut 30 soweit in das Innere des Behältergehäuses 2 hineinragt, dass das Dichtelement 12 in die Nut 30 eingebracht werden kann. Dabei wird auch das Federelement 15 zwischen dem Anschlag 14 und dem Kragen 24 vorgespannt. Der Ventilkolben 11 wird in der beschriebenen Position gehalten bis das Dichtelement 12 in der Nut 30 eingerastet ist und danach wieder entlastet beziehungsweise losgelassen. Der Ventilkolben 11 mit dem nun darauf montierten Dichtelement 12 wird dann durch das Federelement 15 zurückbewegt bis das Dichtelement 12 an dem Ventilsitz 21 zur Anlage kommt und angepresst wird. Dadurch werden durch das Dichtelement 12 gleichzeitig die Absperrfunktion der Absperrvorrichtung 10 sowie deren Lagesicherung realisiert.

### Bezugszeichen:

- 1: Druckmittelbehälter
- 2: Behältergehäuse
- 3: Druckmittelkammern
- 4: Stutzen
- 5: Nachlaufkanal
- 6: Aufnahmesitz
- 7: Hauptbremszylinder
- 8: Dichtung
- 9: Kanal
- 10: Absperrvorrichtung
- 11: Ventilkolben
- 12: Dichtelement
- 13: Haltescheibe
- 14: Anschlag
- 15: Federelement
- 16: Ventileinheit
- 17: Scheibenanschlag
- 18: Lagersitz
- 19: Fixierdorn
- 20: Öffnung
- 21: Ventilsitz
- 22: Wandung
- 23: Boden
- 24: Kragen
- 25: Vorsprung
- 26: Verliersicherungselement
- 27: Einfüllstutzen
- 28: Verschlusskappe
- 29: Rippe
- 30: Nut
- 31: Innenbereich

## Patentansprüche

1. Druckmittelbehälter (1) für eine hydraulische Bremsanlage mit einer hydraulischen Schnittstelle zum Anschluss des Druckmittelbehälters (1) an eine andere Komponente, wobei der Druckmittelbehälter (1) über ein Behältergehäuse (2) verfügt, die Schnittstelle wenigstens einen an dem Behältergehäuse (2) angeordneten Stutzen (4) umfasst, der in einen Aufnahmesitz (6) der anderen Komponente aufgenommen ist, der Stutzen (4) einen Kanal (9) aufweist, der eine hydraulische Verbindung zwischen einem Innenraum des Behältergehäuses (2) und der anderen Komponente sicherstellt, wobei eine Absperrvorrichtung (10) zum Absperren der hydraulischen Verbindung vorgesehen ist, die geöffnet ist, wenn der Stutzen (4) in dem Aufnahmesitz (6) aufgenommen ist, wobei die Absperrvorrichtung (10) einen verschiebbaren Ventilkolben (11) und ein Dichtelement (12) aufweist, wobei das Dichtelement (12) zur Lagesicherung des Ventilkolbens (11) ausgebildet ist **dadurch gekennzeichnet, dass** zumindest ein Bereich des Ventilkolbens (11) in dem geschlossenen Zustand der Absperrvorrichtung (10) in eine axiale Richtung des Ventilkolbens (11) zugbeansprucht ist.

2. Druckmittelbehälter (1) nach Anspruch 1 **dadurch gekennzeichnet, dass** das Dichtelement (12) von dem Ventilkolben (11) aufgenommen und gegen einen Ventilsitz (21) gepresst ist, wenn der Stutzen (4) nicht in dem Aufnahmesitz (6) aufgenommen ist.

3. Druckmittelbehälter (1) nach Anspruch 2 **dadurch gekennzeichnet, dass** der Ventilkolben (11) einen Anschlag (14) aufweist und ein Federelement (15) zwischen dem Anschlag (14) und einem gehäusefesten Element des Behältergehäuses (2) elastisch vorgespannt angeordnet ist.

4. Druckmittelbehälter (1) nach Anspruch 3 **dadurch gekennzeichnet, dass** das Federelement (15) in dem Kanal (9) angeordnet ist.

5. Druckmittelbehälter (1) nach Anspruch 3 **dadurch gekennzeichnet, dass** das Federelement (15) zwischen dem Anschlag (14) und einem Kragen (24) vorgespannt angeordnet ist, wobei der Kragen (24) in den Kanal (9) hineinragt.

6. Druckmittelbehälter (1) nach wenigstens einem der vorstehenden Ansprüche **dadurch gekennzeichnet, dass** das Dichtelement (12) als ein O-Ring ausgebildet ist.

7. Druckmittelbehälter (1) nach wenigstens einem der vorstehenden Ansprüche **dadurch gekennzeichnet, dass** das die andere Komponente ein Hauptbremszylinder (7) ist.

8. Druckmittelbehälter (1) nach wenigstens einem der vorstehenden Ansprüche **dadurch gekennzeichnet, dass** das die andere Komponente eine starre oder flexible Leitungsverbindung zwischen dem Hauptbremszylinder (7) und dem Druckmittelbehälter (1) ist.

9. Verfahren zur Montage einer Absperrvorrichtung (10) in den Druckmittelbehälter (1) mit den Merkmalen nach wenigstens einem der Ansprüche 1 bis 8 **dadurch gekennzeichnet, dass** folgende Verfahrensschritte umfasst sind:
- Aufschieben des Federelements (15) auf den Ventilkolben (11),
- Einsetzen des Ventilkolbens (11) mit dem daran aufgeschobenen Federelement (15) in den Kanal (9) in Richtung Innenraum des Behältergehäuses (2) unter Aufbau einer Vorspannung des Federelements (15) durch Belastung eines dem Innenraum des Behältergehäuses (2) entgegengesetzten Endes des Ventilkolbens (11), bis das andere Ende des Ventilkolbens (11) in den Innenraum des Behältergehäuses (2) hineinragt,
- halten der im vorstehendem Verfahrensschritt erreichten Position des Ventilkolbens (11),
- Montieren des Dichtelements (12) auf dem Ventilkolben (11),
- Entlasten des Ventilkolbens (11).

10. Verfahren zur Montage eines Druckmittelbehälters (1) mit den Merkmalen nach wenigstens einem der Ansprüche 1 bis 9 an einer anderen Komponente **dadurch gekennzeichnet, dass** die Absperrvorrichtung (10) durch eine Paarung des Druckmittelbehälters (1) mit einer anderen Komponente geöffnet wird.

## Claims

1. Pressure medium tank (1) for a hydraulic brake system with a hydraulic interface for the connection of the pressure medium tank (1) to another component, the pressure medium tank (1) having a tank housing (2), the interface comprising at least one connection piece (4) which is arranged on the tank housing (2) and is received into a receiving seat (6) of the other component, the connection piece (4) having a channel (9) which ensures a hydraulic connection between an interior space of the tank housing (2) and the other component, a shut-off apparatus (10) for shutting off the hydraulic connection being provided, which shut-off apparatus (10) is open when the connection piece (4) is received in the receiving seat (6), the shut-off apparatus (10) having a displaceable valve piston (11) and a sealing element (12), the sealing element (12) being configured for positional securing of the valve piston (11), **characterized in that** at least one region of the valve piston (11) is subjected to a tensile load in an axial direction of the valve piston (11) in the closed state of the shut-off apparatus (10).

2. Pressure medium tank (1) according to Claim 1, **characterized in that** the sealing element (12) is received by the valve piston (11) and is pressed against a valve seat (21) when the connection piece (4) is not received in the receiving seat (6).

3. Pressure medium tank (1) according to Claim 2, **characterized in that** the valve piston (11) has a stop (14), and a spring element (15) is arranged in an elastically prestressed manner between the stop (14) and an element of the tank housing (2), which element is fixed on the housing.

4. Pressure medium tank (1) according to Claim 3, **characterized in that** the spring element (15) is arranged in the channel (9).

5. Pressure medium tank (1) according to Claim 3, **characterized in that** the spring element (15) is arranged in a prestressed manner between the stop (14) and a collar (24), the collar (24) protruding into the channel (9).

6. Pressure medium tank (1) according to at least one of the preceding claims, **characterized in that** the sealing element (12) is configured as an O-ring.

7. Pressure medium tank (1) according to at least one of the preceding claims, **characterized in that** the other component is a brake master cylinder (7).

8. Pressure medium tank (1) according to at least one of the preceding claims, **characterized in that** the other component is a rigid or flexible line connection between the brake master cylinder (7) and the pressure medium tank (1).

9. Method for mounting a shut-off apparatus (10) into the pressure medium tank (1) with the features according to at least one of Claims 1 to 8, **characterized in that** the following method steps are included:
- pushing of the spring element (15) onto the valve piston (11),
- inserting of the valve piston (11) with the spring element (15) which is pushed onto it into the channel (9) in the direction of the interior space of the tank housing (2), with the developing of a prestress of the spring element (15) by way of loading of an end of the valve piston (11), which end lies opposite with respect to the interior space of the tank housing (2), until the other end of the valve piston (11) protrudes into the interior space of the tank housing (2),
- holding of that position of the valve piston (11) which is reached in the preceding method step,
- mounting of the sealing element (12) on the valve piston (11),
- relieving of the valve piston (11).

10. Method for mounting a pressure medium tank (1) with the features according to at least one of Claims 1 to 9 on another component, **characterized in that** the shut-off apparatus (10) is opened by way of a pairing of the pressure medium tank (1) with another component.

## Revendications

1. Contenant de fluide sous pression (1) pour une unité de freinage hydraulique muni d'une jonction hydraulique pour le raccord du contenant de fluide sous pression (1) à un autre composant, le contenant de fluide sous pression (1) disposant d'un boîtier de contenant (2), la jonction comprenant au moins un embout (4) agencé sur le boîtier de contenant (2), qui est reçu dans un siège de réception (6) de l'autre composant, l'embout (4) comprenant un canal (9), qui assure une liaison hydraulique entre une chambre intérieure du boîtier de contenant (2) et l'autre composant, un dispositif de blocage (10) pour le blocage de la liaison hydraulique étant prévu, qui est ouvert lorsque l'embout (4) est reçu dans le siège de réception (6), le dispositif de blocage (10) comprenant un piston de soupape déplaçable (11) et un élément d'étanchéité (12), l'élément d'étanchéité (12) étant configuré pour assurer la position du piston de soupape (11), **caractérisé en ce qu'**au moins une zone du piston de soupape (11) est sollicitée en traction dans une direction axiale du piston de soupape (11) à l'état fermé du dispositif de blocage (10).

2. Contenant de fluide sous pression (1) selon la revendication 1, **caractérisé en ce que** l'élément d'étanchéité (12) est reçu par le piston de soupape (11) et pressé contre un siège de soupape (21) lorsque l'embout (4) n'est pas reçu dans le siège de réception (6) .

3. Contenant de fluide sous pression (1) selon la revendication 2, **caractérisé en ce que** le piston de soupape (11) comprend une butée (14) et un élément ressort (15) est agencé sous forme prétendue élastiquement entre la butée (14) et un élément fixe par rapport au boîtier du boîtier de contenant (2).

4. Contenant de fluide sous pression (1) selon la revendication 3, **caractérisé en ce que** l'élément ressort (15) est agencé dans le canal (9).

5. Contenant de fluide sous pression (1) selon la revendication 3, **caractérisé en ce que** l'élément ressort (15) est agencé sous forme prétendue entre la butée (14) et un col (24), le col (24) dépassant dans le canal (9).

6. Contenant de fluide sous pression (1) selon au moins l'une quelconque des revendications précédentes, **caractérisé en ce que** l'élément d'étanchéité (12) est configuré sous la forme d'un joint torique.

7. Contenant de fluide sous pression (1) selon au moins l'une quelconque des revendications précédentes, **caractérisé en ce que** l'autre composant est un cylindre de frein principal (7).

8. Contenant de fluide sous pression (1) selon au moins l'une quelconque des revendications précédentes, **caractérisé en ce que** l'autre composant est une liaison de conduite rigide ou flexible entre le cylindre de frein principal (7) et le contenant de fluide sous pression (1).

9. Procédé de montage d'un dispositif de blocage (10) dans le contenant de fluide sous pression (1) ayant les caractéristiques selon au moins l'une quelconque des revendications 1 à 8, **caractérisé en ce que** les étapes de procédé suivantes sont comprises :
- le coulissement de l'élément ressort (15) sur le piston de soupape (11),
- l'insertion du piston de soupape (11) avec l'élément ressort (15) coulissé sur celui-ci dans le canal (9) en direction de la chambre intérieure du boîtier de contenant (2) avec établissement d'une prétension de l'élément ressort (15) par chargement d'une extrémité, opposée à la chambre intérieure du boîtier de contenant (2), du piston de soupape (11), jusqu'à ce que l'autre extrémité du piston de soupape (11) dépasse dans la chambre intérieure du boîtier de contenant (2),
- le maintien de la position du piston de soupape (11) atteinte dans l'étape de procédé précédente,
- le montage de l'élément d'étanchéité (12) sur le piston de soupape (11),
- le déchargement du piston de soupape (11).

10. Procédé de montage d'un contenant de fluide sous pression (1) ayant les caractéristiques selon au moins l'une quelconque des revendications 1 à 9 sur un autre composant, **caractérisé en ce que** le dispositif de blocage (10) est ouvert par un appariement du contenant de fluide sous pression (1) avec un autre composant.
